# FASCICULE DE BREVET EUROPEEN

(11) **EP 2 833 496 B1**
(45) Date de publication et mention de la délivrance du brevet: **16.03.2016**
(21) Numéro de dépôt: 14179051.9
(22) Date de dépôt: 30.07.2014
(51) Int. Cl.: H02G 3/06

(54) **Dispositif de chemin de câbles et méthode de raccordement du dispositif de chemin de câbles avec un tronçon de chemin de câbles**
Kabelkanalvorrichtung und Methode zum Anschließen dieser Kabelkanalvorrichtung an ein Teilstück des Kabelkanals
Cable-tray device and method of connecting the cable-tray device with a cable-tray section

(30) Priorité: 31.07.2013 FR 1357592
(43) Date de publication de la demande: 04.02.2015
(73) Titulaire: Gewiss France SAS, 21430 Liernais (FR)
(72) Inventeur: Leguy, Claude, 21430 Marcheseuil (FR)
(74) Mandataire: Myon, Gérard Jean-Pierre

(56) Documents cités:
- EP-A1- 0 083 809
- DE-U1-202010 015 292
- FR-A1- 2 686 141

## Description

L'invention concerne un dispositif de chemin de câbles comprenant un tronçon de chemin de câble à profil en U et deux éclisses de raccordement du tronçon de chemin de câbles avec un autre tronçon de chemin de câbles. L'invention concerne également une méthode de raccordement du dispositif de chemin de câbles avec l'autre tronçon de chemin de câbles.

Dans le domaine des chemins de câbles, il est connu qu'un chemin de câbles est formé par plusieurs tronçons qui sont raccordés entre eux par des éclisses. Par exemple, FR-A-2 686 141 divulgue un dispositif de chemin de câbles comprenant deux tronçons de chemin de câbles qui sont raccordés entre eux par deux éclisses. Dans ce document, les deux tronçons de chemin de câbles sont d'abord mis bout-à-bout, puis les éclisses sont amenées dans la zone de jonction entre les deux tronçons de chemin de câbles. Elles sont ensuite fixées de manière automatique par basculement en direction des parois des deux tronçons de chemin de câbles.

Avec un tel dispositif, les éclisses et les tronçons de chemin de câbles sont stockés et livrés séparément et sont assemblés ensuite sur site. L'opérateur doit donc rassembler le nombre de tronçons de chemin de câbles et d'éclisses adéquat avant de pouvoir commencer à travailler, ce qui augmente considérablement le temps de montage. En outre, les éclisses et les tronçons de chemin de câbles sont stockés séparément sous des références différentes. Ainsi, le volume occupé par les pièces pendant le stockage est plus important et la gestion du nombre d'éclisses à prévoir en fonction du nombre du chemin de câbles est onéreuse.

Pour palier ces inconvénients, certains dispositifs de chemin de câbles sont pré-éclissés, c'est-à-dire que deux éclisses de raccordement sont montées à demeure sur un tronçon de chemin de câbles au niveau de son extrémité. Cela permet effectivement d'affecter au tronçon de chemin de câbles et aux éclisses une même référence et simplifie le travail de l'opérateur puisque celui-ci à tout sous la main pour travailler. Cependant, les éclisses étant montées à l'extrémité du chemin de câbles dans leurs positions définitives, elles dépassent donc du chemin de câbles et augmentent sa longueur totale. Outre l'encombrement, ce surcroît de longueur entraine des difficultés logistiques car le dispositif de chemin de câbles n'a plus une longueur standard et les infrastructures utilisées pour manipuler les tronçons de chemin de câbles ne sont pas prévues pour exploiter des chemins de câbles n'ayant pas une longueur standard.

C'est à ces inconvénients qu'entend plus particulièrement remédier l'invention en proposant un dispositif de chemin de câbles pré-éclissé qui est de longueur standard.

A cet effet, l'invention concerne un tronçon de chemin de câbles s'étendant selon un axe longitudinal, qui comporte un fond délimité entre deux parois, ces parois ayant une partie terminale qui délimite un premier bord libre, deux éclisses de raccordement du tronçon de chemin de câbles avec un autre tronçon du chemin de câbles, qui comprennent chacune une première branche adaptée pour être disposée contre une paroi du tronçon de chemin de câble et une deuxième branche adaptée pour être disposée contre le fond du tronçon de chemin de câbles, la première branche des éclisses comportant une partie terminale qui délimite un deuxième bord libre et qui est apte à chevaucher la partie terminale de la paroi, les éclisses étant aptes à être coincées sur le tronçon de chemin de câbles dans une configuration provisoire où elles chevauchent les parois. Conformément à l'invention, en configuration provisoire, les éclisses sont immobilisées sur le tronçon de chemin de câbles par des moyens de freinage ou blocage qui s'opposent au déplacement des éclisses en translation axiale le long du tronçon de chemin de câble, et des moyens de verrouillage élastique qui s'opposent au basculement des éclisses autour des parois du tronçon de chemin de câble.

Grâce à l'invention, il est possible de stocker et livrer un dispositif de chemin de câbles dans lequel les éclisses sont montées provisoirement sur le tronçon de chemin de câbles, dans une configuration où elles n'augmentent pas la longueur totale du dispositif. Dans cette configuration provisoire, les éclisses sont bloquées ou freinées en translation le long des parois du tronçon de chemin de câbles et sont coincées en chevauchement sur le tronçon de chemin de câbles par des moyens de verrouillage élastique qui s'opposent au basculement de l'éclisse. On peut donc manipuler librement le dispositif de chemin de câbles sans risquer qu'une éclisse se détache du tronçon de chemin de câbles.

Selon des aspects avantageux mais non obligatoires de l'invention, un dispositif de chemin de câbles peut incorporer une ou plusieurs des caractéristiques suivantes prises dans toute combinaison techniquement admissible :
- Les moyens de verrouillage élastique comprennent deux languettes qui sont portées par chaque éclisse et une nervure prévue au fond du tronçon de chemin de câbles, la nervure opposant, en coopérant avec les languettes, une résistance au basculement des éclisses selon une direction opposée aux parois.
- Lors du raccordement du tronçon de chemin de câble avec l'autre tronçon de chemin de câbles, les deux languettes pénètrent dans des trous ménagés respectivement sur le fond du tronçon de chemin de câble et de l'autre tronçon de chemin de câbles.
- Les languettes sont insérées dans les trous avec un jeu minimal avec le contour des trous qui est compris entre 0,7 mm et 1,5 mm.
- La deuxième branche de l'éclisse comprend une extrémité libre élastiquement déformable et en ce que, une fois que le tronçon de chemin de câbles est raccordé avec l'autre tronçon de chemin de câbles, la nervure des moyens de verrouillage élastique s'oppose, en coopérant avec l'extrémité libre, au basculement des éclisses selon une direction opposée aux parois.
- La partie terminale des éclisses se prolonge par un pli qui délimite le bord libre de l'éclisse et qui forme, avec une partie cintrée de la partie terminale de l'éclisse, un logement de réception du bord libre du tronçon de chemin de câbles.
- Les moyens de blocage de l'éclisse en translation comprennent un relief disposé au sein du logement de réception du bord libre du tronçon de chemin de câbles, la partie terminale des parois étant coincée entre le relief et la portion cintrée de la partie terminale de l'éclisse lorsque l'éclisse est dans sa configuration provisoire.
- Dans sa configuration provisoire, la deuxième branche de l'éclisse repose sur la nervure prévue au fond du tronçon de chemin de câbles.

L'invention concerne également une méthode de raccordement d'un dispositif tel que décrit précédemment avec un autre tronçon de chemin de câbles. Cette méthode comprend des étapes consistant à :
a) mettre bout-à-bout le tronçon de chemin de câbles du dispositif et l'autre tronçon de chemin de câbles,
b) basculer les éclisses à partir de leur configuration provisoire selon une direction opposée aux parois,
c) déplacer les éclisses le long du tronçon de chemin de câbles jusqu'à l'extrémité du tronçon de chemin de câbles de manière que l'éclisse chevauche à la fois le tronçon de chemin de câbles et l'autre tronçon de chemin de câbles,
d) basculer les éclisses en direction des parois des tronçons de chemins de câbles,
e) verrouiller les éclisses sur les parois des deux tronçons de chemin de câbles.

Selon des aspects avantageux, mais non obligatoires, la méthode telle que décrite précédemment peut incorporer au moins une des caractéristiques suivantes prises dans toute combinaison techniquement admissible :
- La méthode comprend une étape f) antérieure à l'étape a), consistant à monter provisoirement les éclisses sur le tronçon de chemin de câbles, de manière qu'elles soient inscrites dans le tronçon de chemin de câbles.
- Les étapes b) à e) ne font pas intervenir de déplacement du tronçon de chemin de câbles par rapport à l'autre tronçon de chemin de câbles.

L'invention sera mieux comprise et d'autres avantages de celle-ci apparaitront plus clairement à la lumière de la description qui va suivre d'un mode de réalisation d'un dispositif de chemin de câbles conforme à son principe, donnée uniquement à titre d'exemple et faite en référence aux dessins dans lesquels :
- la figure 1 est une vue en perspective d'un dispositif de chemin de câbles conforme à l'invention, comprenant un tronçon de chemin de câbles pré-éclissé, ce dispositif étant accompagné d'un autre tronçon de chemin de câbles,
- la figure 2 est une vue en perspective d'une éclisse appartenant au dispositif de chemin de câbles de la figure 1,
- la figure 3 est une vue à plus grande échelle selon la flèche III de la figure 2,
- la figure 4 est une vue à plus grande échelle de l'encerclé IV de la figure 3,
- la figure 5 est une vue partielle et à plus grande échelle selon la flèche V de la figure 1,
- la figure 6 est une vue analogue à la figure 5 après basculement de l'éclisse selon une direction opposée à une paroi du tronçon de chemin de câbles,
- la figure 7 est une vue analogue à la figure 1 dans laquelle les deux tronçons de chemin de câbles ont été mis bout à bout et où les éclisses ont été basculées selon une direction opposée aux parois du tronçon de chemin de câbles et déplacées en translation le long du tronçon de chemin de câbles jusqu'à arriver à la jonction avec l'autre tronçon de chemin de câbles,
- la figure 8 est une vue partielle et à plus grande échelle selon la flèche VIII de la figure 7,
- la figure 9 est une vue de côté du dispositif de chemin de câbles raccordé à l'autre tronçon de chemin de câbles, cette figure est prise dans le sens de la flèche IX à la figure 7, après montage définitif des éclisses,
- la figure 10 est une coupe partielle selon la ligne X-X de la figure 9,
- la figure 11 est une vue en perspective montrant le dessous du dispositif de chemin de câbles, alors raccordé à l'autre tronçon de chemin de câbles, et
- la figure 12 est une vue à plus grande échelle de l'encadré XII de la figure 11.

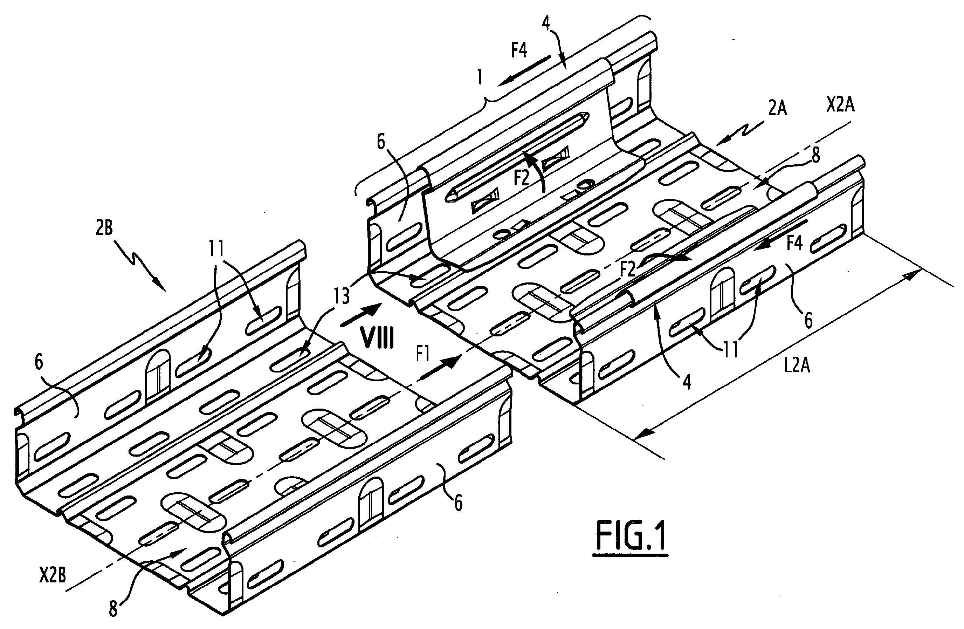

Sur la figure 1 est représenté un dispositif de chemin de câbles 1 comprenant un premier tronçon de chemin de câbles 2A et deux éclisses 4 de raccordement du tronçon de chemin de câbles 2A avec un autre tronçon de chemin de câbles 2B. Les tronçons de chemin de câbles 2A et 2B sont réalisés en tôle métallique pliée et poinçonnée et s'étendent respectivement le long d'axes longitudinaux X2A et X2B. Ils sont à profil en U à fond plat lorsqu'on regarde dans la direction de l'axe X2A ou X2B et comprennent chacun un fond plat 8 délimité entre deux parois 6. On note A1 un angle entre le fond 8 et une paroi 6, cet angle A1 étant environ égal à 90°. Les parois 6 sont perforées par des trous traversant et oblongs 11. De même, le fond 8 comprend également plusieurs trous traversant et oblongs 13. Les trous 11 et 13 sont régulièrement espacés le long du tronçon de chemin de câbles et sont étirés chacun suivant une direction longitudinale parallèle à l'axe X2A ou à l'axe X2B.

Le dispositif 1 est pré-éclissé, c'est-à-dire que les éclisses 4 sont montées provisoirement entre les parois 6 du tronçon de chemin de câbles 2A et sont inscrites dans le tronçon de chemin de câbles 2A. Autrement formulé, les éclisses 4 ne dépassent pas axialement du tronçon de chemin de câbles 2A. Les éclisses 4 chevauchent les parois 6 du tronçon de chemin de câbles 2A et sont coincées, par des moyens décrits ci-dessous, en translation le long de l'axe X2A et en basculement autour des parois 6, c'est-à-dire autour d'un axe sensiblement parallèle à l'axe X2A. Dans cette configuration, le dispositif 1 conserve une longueur standard, égale à la longueur L2A du tronçon 2A mesurée parallèlement à l'axe X2A, tout en intégrant les éclisses 4, ce qui fait qu'il reste exploitable par des infrastructures dédiées et qu'il est librement manipulable sans risquer que les éclisses tombent ou soient endommagées par un choc. Cette configuration est donc une configuration provisoire utilisée pour le stockage, ou encore pour la livraison du dispositif 1. Par ailleurs, le tronçon de chemin de câbles 2A et les éclisses 4 forment un sous-ensemble manipulable en une opération. Ainsi, le dispositif 1 porte une seule référence, ce qui simplifie la gestion des pièces sur le chantier et facilite le travail de l'opérateur car celui-ci à tout sous la main pour travailler.

Sur les figures 1, 7, 9 et 11, la longueur L2A est relativement faible afin de pouvoir montrer les deux extrémités du tronçon 2A. En pratique, la longueur L2A peut être choisie égale à 2m ou 3m.

Dans la suite de la description est détaillée la fixation d'une première éclisse au niveau d'une paroi des deux tronçons de chemin de câbles 2A et 2B. Ceci est transposable à la seconde éclisse du dispositif 1. De même, une seule éclisse 4 est détaillée ci-après car les deux éclisses du dispositif 1 sont identiques.

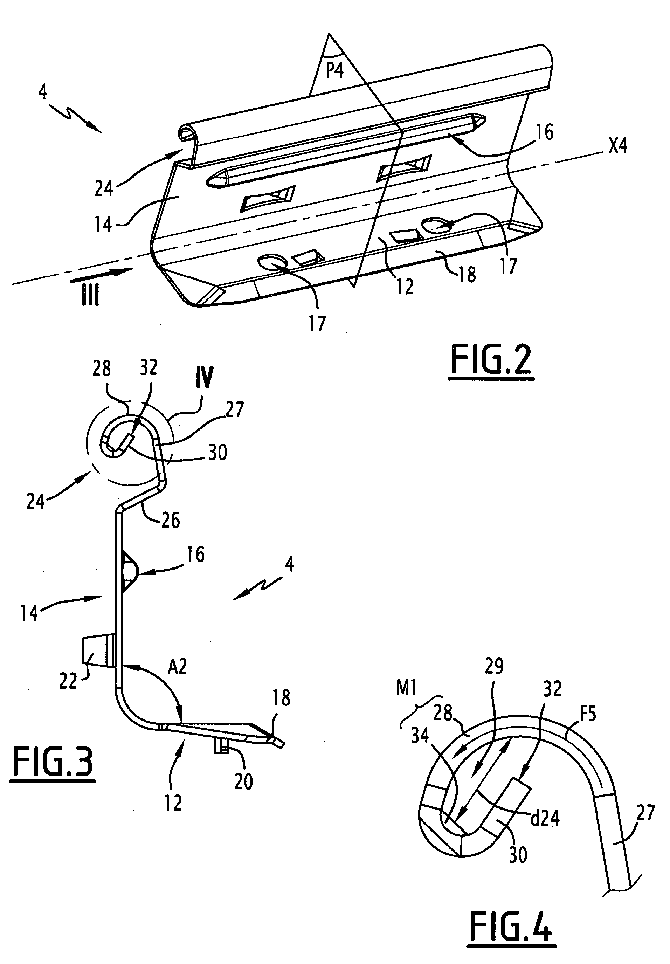

Comme visible à la figure 2, l'éclisse 4 est également réalisée en tôle métallique pliée et s'étend selon un axe longitudinal X4 qui est sensiblement parallèle avec l'axe X2A en configuration montée de l'éclisse 4 sur le tronçon 2A. L'éclisse 4 a un profil en L lorsqu'on regarde dans la direction de l'axe X4, comme représenté à la figure 3, et comprend un plan de symétrie P4 qui est perpendiculaire à l'axe X4. L'éclisse 4 comprend une première branche 12 qui, lorsque les deux tronçons de chemin de câbles 2A et 2B sont éclissés, est plaquée contre le fond 8 des deux chemins de câbles 2A et 2B et une deuxième branche 14 qui, dans la même configuration, est accolée aux parois 6 des deux tronçons de chemin de câbles 2A et 2B. On note A2 un angle entre la branche 12 et la branche 14, cet angle étant environ égal à 90°.

Les éclisses 4 et les tronçons de chemin de câbles 2A et 2B sont relativement flexibles car ils sont réalisés en tôle métalliques.

La branche 12 comprend deux perçages 17 qui sont disposés de part et d'autre du plan médian P4 et qui sont dédiés au passage d'un tournevis pour faire basculer l'éclisse 4 lors du raccordement de deux tronçons de chemin de câbles, comme expliqué ci-après. La branche 12 comprend également une extrémité libre 18 qui est élastiquement déformable. Comme visible à la figure 3, la branche 12 porte sur sa surface inférieure, c'est-à-dire sa surface orientée vers le fond 8 du tronçon de chemin de câbles 2A en configuration montée ou montée provisoirement, deux languettes rigides 20 qui sont disposées de part et d'autre du plan médian P4.

La branche 14 comprend une partie terminale 24 qui délimite un bord libre 32. Cette partie terminale 24 comprend une première portion 26 qui est oblique par rapport à une direction globalement perpendiculaire à la branche 12 de manière à pencher en direction de la branche 12. La partie terminale 24 comprend également une portion 28 qui est cintrée selon une direction F5 opposée à la première branche 12. Autrement dit, la portion 28 est cintrée en direction de la surface extérieure des parois 6. Une portion droite 27 relie la portion cintrée 28 et la portion oblique 26. Enfin, la partie terminale 24 se prolonge, au niveau de la portion 28, par un pli 30 qui définit le bord libre 32 et qui est orienté en direction de la portion cintrée 28 de la partie terminale 24. Le pli 30 forme, avec la portion cintrée 28, un logement 29 au fond duquel est disposé un relief 34. Ce relief 34 est un embouti réalisé en déformant la tôle avec un poinçon intégré dans l'outillage de presse qui sert à produire les éclisses.

On note d24 la distance, prise parallèlement au pli 30, de ce relief 34 à la portion cintrée 28. Par ailleurs, la branche 14 comporte des crevés 22 qui présentent une forme d'arceau et qui font saillie au niveau de la branche 14 du côté opposé à la branche 12.

Par ailleurs, la branche 14 de l'éclisse 4 comporte une nervure de rigidification 16 qui s'étend parallèlement à l'axe X4 sur pratiquement toute la longueur de l'éclisse 4.

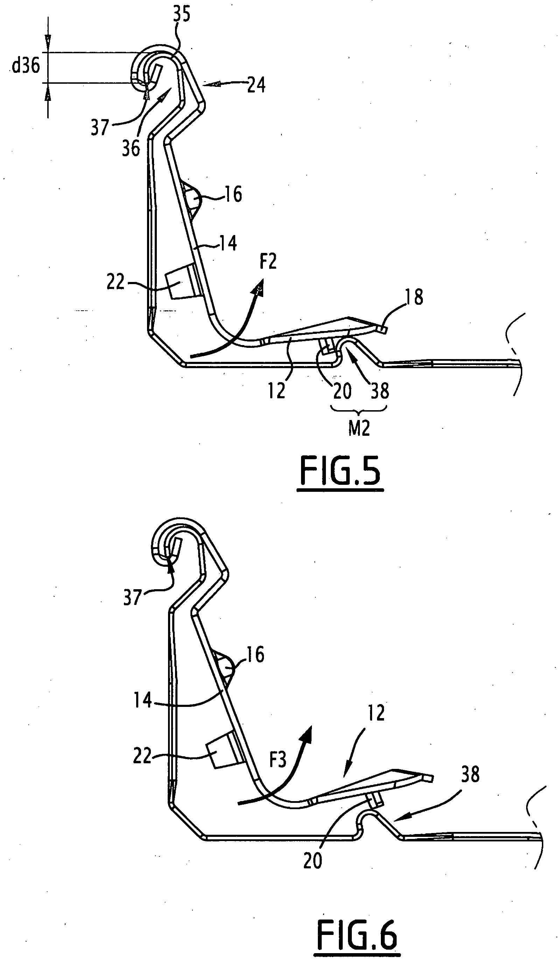

Comme visible à la figure 5, lorsque l'éclisse 4 est dans sa configuration provisoire, la partie terminale 24 de l'éclisse 4 chevauche une partie terminale 36 d'une paroi 6 du tronçon de chemin de câbles 2A. Cette partie terminale 36 délimite un bord libre 37 et est partiellement complémentaire de la partie terminale 24. En effet, seul le pli 30 de la partie terminale 24 n'est pas repris au niveau de la partie terminale 36, ce qui fait que le bord libre 37 de la paroi 6 est reçu dans le logement 29 défini entre le pli 30 et la portion cintrée 28 de la partie terminale 24. On note d36 la distance maximale prise entre le bord libre 37 et une portion cintrée 35 de la partie terminale 36 de la paroi 6. Cette distance d36 est légèrement supérieure à la distance d24, ce qui fait que la partie terminale 36 est, dans cette configuration, prise en étau dans la partie terminale 24 de l'éclisse 4. Plus précisément, cet étau est réalisé entre la portion cintrée 28 et le relief 32 et provoque une légère compression de la partie terminale 36 de la paroi 6. Cet effort de compression entraine une certaine adhérence entre la partie terminale 36 de la paroi 6 et la partie terminale 24 de l'éclisse. Cette adhérence permet de freiner, voire bloquer, le mouvement de l'éclisse 4 en translation le long de la paroi 6 du tronçon de chemin de câbles 2A. La portion 28 forme donc avec le relief 32 des moyens M1 de freinage ou de blocage de l'éclisse 4 en translation le long de la paroi 6.

Comme visible à la figure 5, les éclisses 4 sont, dans leur configuration provisoire, coincées en basculement par rapport au tronçon de chemin de câbles. En effet, une nervure longitudinale 38 s'étendant sur toute la longueur du fond 8 du tronçon de chemin de câbles 2A s'oppose au basculement des languettes 20 selon une direction opposée à la paroi 6 car les languettes 20 sont, dans cette configuration, disposées entre la paroi 6 et la nervure 38. Les languettes 20 forment donc, avec la nervure 38, des moyens M2 de verrouillage élastique du basculement de l'éclisse 4 dans sa configuration provisoire.

En outre, l'extrémité 18 de la branche 12 repose sur la nervure 38, ce qui empêche l'éclisse 6 de basculer en direction de la paroi 6.

Pour assembler les deux tronçons de chemin de câbles 2A et 2B ensemble, il convient tout d'abord de mettre bout à bout les tronçons 2A et 2B, comme représenté par la flèche F1 à la figure 1. Ainsi, les axes X2A et X2B sont sensiblement confondus selon un axe longitudinal commun X2. Ensuite, les éclisses 4 doivent être dégagées de leur configuration provisoire représentée aux figures 1 et 5.

Pour ce faire, l'opérateur doit forcer pour vaincre les moyens de verrouillage élastique M2. En effet un effort F2 appliqué pour basculer l'éclisse doit permettre de déformer légèrement l'éclisse 4 et/ou les tronçons de chemin de câbles 2A et 2B pour que les languettes 20 passent au dessus de la nervure 38. Plus précisément, grâce à la flexibilité de l'éclisse 4 et des tronçons 2A et 2B, l'effort F2 entraîne que l'angle A1 entre le fond 8 et la paroi 6 des tronçons 2A et 2B augmente légèrement alors que l'angle A2 entre la branche 12 et la branche 14 de l'éclisse 4 diminue légèrement. Cela amène l'éclisse 4 dans la configuration de la figure 6. En pratique, l'effort F2 peut être appliqué en glissant un tournevis sous l'extrémité 18 de la branche 12 ou en opérant à la main.

Dans la configuration de la figure 6, les languettes 20 ont dépassé le bossage 38 et l'éclisse 4 est déplaçable en translation le long de l'axe X2. En effet, le basculement de l'éclisse 4 a modifié le positionnement de la partie terminale 24 de l'éclisse 4 par rapport à la partie terminale 36 de la paroi 6 du tronçon de chemin de câbles 2A. Cette modification entraine que la partie terminale 36 de la paroi 6 du tronçon de chemin de câbles 2A n'est plus coincée entre la portion cintrée 28 et le relief 32 de la partie terminale 24 de l'éclisse 4. L'effort d'adhérence entre l'éclisse 4 et le tronçon de chemin de câbles 2A est donc plus faible et il est possible de déplacer l'éclisse 4 le long de la paroi 6.

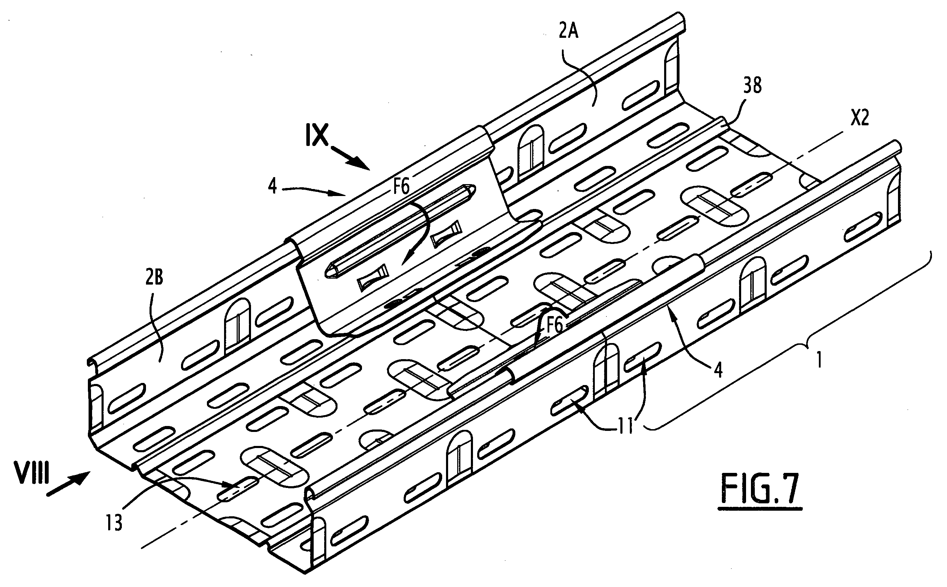

Cependant, afin de déplacer plus aisément l'éclisse 4 le long du tronçon de chemin de câbles 2A, on applique un basculement supplémentaire F3 pour supprimer l'adhérence entre l'éclisse 4 et la paroi 6. Ainsi, l'opérateur peut faire glisser, comme représenté par les flèches F4 à la figure 1, chaque éclisse 4 le long du tronçon de chemin de câbles 2A jusqu'à arriver à la zone de raccordement avec le tronçon de chemin de câbles 2B après que les tronçons 2A et 2B ont été mis bout à bout. Cette configuration est représentée à la figure 7.

Dans la configuration de la figure 7, les éclisses 4 sont à cheval sur les deux parois 6 des tronçons de chemin de câbles 2A et 2B.

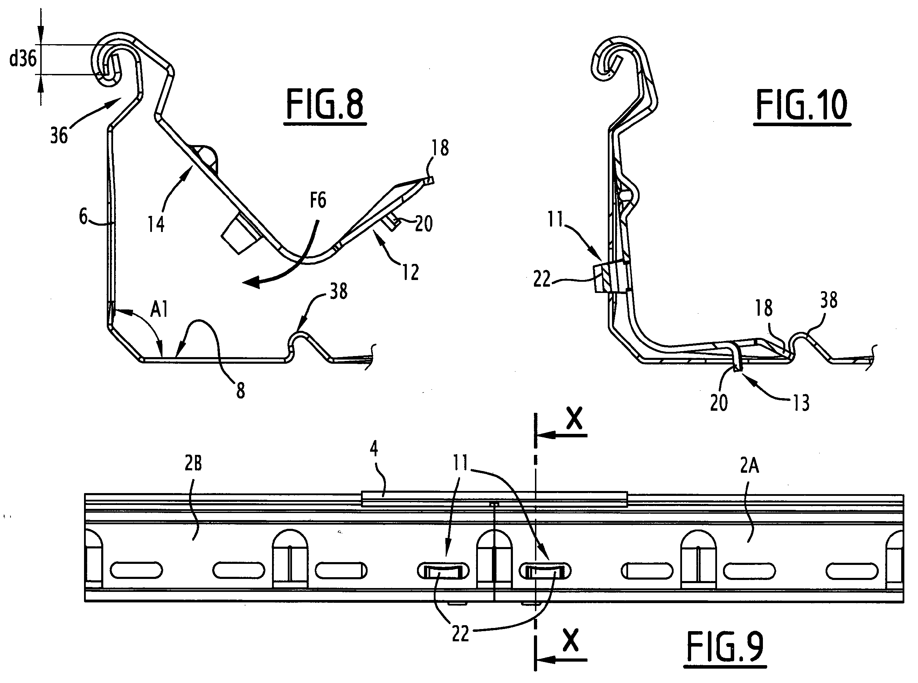

Pour fixer les tronçons de chemin de câbles 2A et 2B ensemble, il convient de basculer les éclisses 4 en direction des parois 6 des tronçons de chemin de câbles 2A et 2B. Ce mouvement de basculement est représenté aux figures 7 et 8 par une flèche F6. En pratique, l'opérateur passe un tournevis à travers les trous oblongs 13 et les perçages 17 pour basculer l'éclisse 4 jusqu'à la configuration des figures 9 et 10. Durant le basculement de la configuration de la figure 8 à la configuration de la figure 10, l'opérateur vainc la résistance opposée par la nervure 38 au passage des languettes 20 et de l'extrémité 18 de la branche 12. La déformation conjuguée de l'angle A1 qui s'ouvre légèrement entre la paroi 6 et le fond 8 des tronçons 2A et 2B et de l'angle A2 qui se ferme légèrement entre la branche 12 et la branche 14 de l'éclisse 4 entraîne une déformation élastique de l'extrémité 18 qui passe au dessus de la nervure 38 et vient se caler, en fin de course, contre la nervure 38. Dans cette configuration montée définitivement représentée aux figures 9 à 12, l'extrémité 18 s'oppose au basculement de l'éclisse en sens inverse, c'est-à-dire selon une direction opposée à la paroi 6.

En parallèle, les languettes 20 pénètrent à l'intérieur des perforations 13 du fond 8 des deux tronçons de chemin de câbles 2A et 2B et les arceaux 22 traversent les trous 11 des parois 6 des tronçons de chemin de câbles. Dans cette configuration, les deux tronçons de chemin de câbles 2A et 2B sont solidaires l'un de l'autre. Les éclisses 4 se fixent donc automatiquement sur les tronçons de chemin de câbles 2A et 2B, sans nécessiter d'organes de fixation tels que des boulons.

Par ailleurs, comme il ressort de ce qui précède, l'éclissage des tronçons 2A et 2B ensemble repose surtout sur la manipulation des éclisses 4 et peu sur la manipulation des tronçons 2A et 2B. En effet, la seule opération à réaliser manuellement sur les tronçons 2A et 2B est de les mettre bout-à-bout pour aligner correctement leur partie terminale 36. Or, de nombreux dispositifs de chemin de câbles actuels prévoient de pivoter un tronçon de chemin de câbles par rapport à un autre pour réaliser l'éclissage, ce qui est pénible en raison, d'une part, de la taille et du poids des tronçons de chemin de câbles et, d'autre part, de l'encombrement présent sur certains chantiers.

Ainsi, le dispositif 1 selon l'invention permet d'éclisser deux tronçons de chemin de câbles sans beaucoup manipuler les tronçons 2A et 2B et, ainsi, de travailler dans un espace réduit.

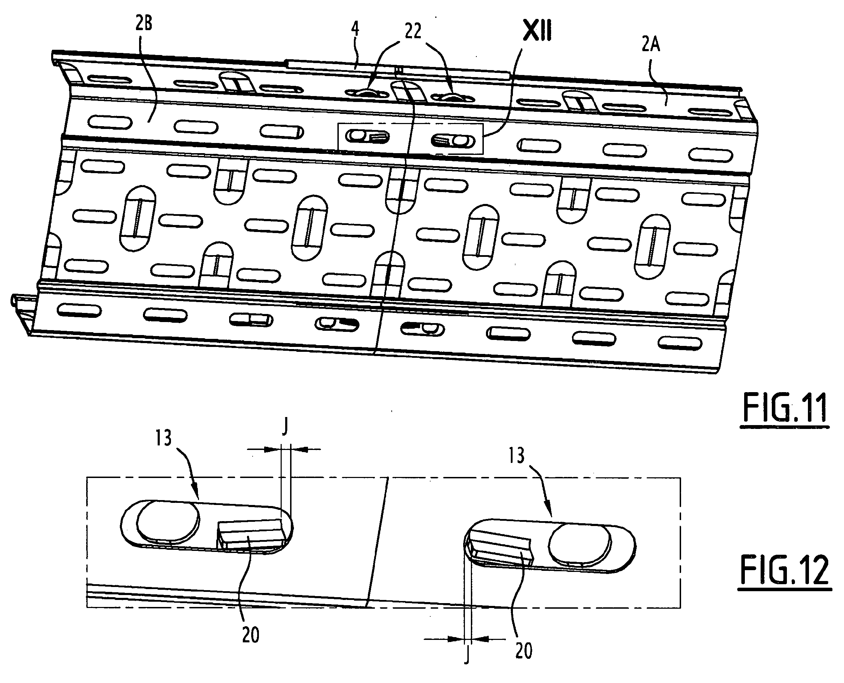

Comme visible à la figure 12, les languettes 20 sont insérées dans les trous oblongs 13 avec un certain jeu axial J. Ce jeu J représente la distance minimale, prise parallèlement à l'axe X2, entre les languettes 20 et le contour des trous 13. Ce jeu J est compris entre 0,7 mm et 1,5 mm afin que, d'une part, les languettes 20 puissent être insérées facilement dans les trous et, d'autre part, que les languettes 20 viennent rapidement en contact du contour des trous 13 lorsque les tronçons de chemin de câbles sont sous charge, c'est-à-dire lorsque des câbles passent à l'intérieur du chemin de câbles. En effet, lorsque les câbles sont installés dans les tronçons de chemin de câbles 2A et 2B, le poids des câbles exerce un couple dirigé vers le bas au niveau des éclisses 4. Ce couple tend à entrainer les tronçons de chemin de câbles 2A et 2B vers le bas de manière que le contour des trous 13 vient au contact des languettes 20. Les languettes 20 s'opposent alors au basculement des tronçons de chemin de câbles 2A et 2B sous l'effet de la gravité. Les languettes 20 offrent donc une résistance au couple exercé par les câbles sur les tronçons de chemin de câbles. Ainsi, outre leur fonction de verrouillage élastique, les languettes 20 remplissent aussi une fonction de renfort de la tenue mécanique de l'ensemble formé par les deux tronçons de chemins de câbles 2A et 2B.

En variante non représentée, les tronçons de chemin de câbles sont des goulottes en matière plastique.

Selon une autre variante non représentée, les tronçons de chemin de câbles ont un profil autre qu'un profil en U à fond plat et les éclisses 4 ont un profil autre qu'un profil en L.

Selon une autre variante, les éclisses 4 sont basculées manuellement par l'opérateur, sans utiliser de tournevis.

Selon une autre variante non représentée, le tronçon 2B est également pré-éclissé, c'est-à-dire qu'il comporte deux éclisses 4 montées provisoirement de manière analogue à celle du dispositif 1. En revanche, si le tronçon 2B est le dernier tronçon du chemin de câbles, celui-ci n'est pas pré-éclissé.

Les variantes et modes de réalisation mentionnés ci-dessus peuvent être combinés pour donner de nouveaux modes de réalisation de l'invention.

## Revendications

1. Dispositif de chemin de câbles (1) comprenant :
- un tronçon de chemin de câbles (2A) s'étendant selon un axe longitudinal (X2A), qui comporte un fond (8) délimité entre deux parois (6), ces parois ayant une partie terminale (36) qui délimite un premier bord libre (37),
- deux éclisses (4) de raccordement du tronçon de chemin de câbles avec un autre tronçon du chemin de câbles (2B), qui comprennent chacune une première branche (14) adaptée pour être disposée contre une paroi (6) du tronçon de chemin de câbles et une deuxième branche (12) adaptée pour être disposée contre le fond (8) du tronçon de chemin de câbles, la première branche des éclisses comportant une partie terminale (24) qui délimite un deuxième bord libre (32) et qui est apte à chevaucher la partie terminale (36) de la paroi, les éclisses étant aptes à être coincées sur le tronçon de chemin de câbles (2A) dans une configuration provisoire où elles chevauchent les parois (6),
**caractérisé en ce que**, en configuration provisoire, les éclisses (4) sont immobilisées sur le tronçon de chemin de câbles par :
- des moyens de freinage ou blocage (M1) qui s'opposent, au déplacement (F4) des éclisses en translation axiale le long du tronçon de chemin de câbles, et
- des moyens de verrouillage élastique (M2) qui s'opposent au basculement (F2) des éclisses autour des parois du tronçon de chemin de câbles.

2. Dispositif selon la revendication 1, **caractérisé en ce que** les moyens de verrouillage élastique (M2) comprennent deux languettes (20) qui sont portées par chaque éclisse (4) et une nervure (38) prévue au fond (8) du tronçon de chemin de câbles (2A), la nervure opposant, en coopérant avec les languettes, une résistance au basculement des éclisses selon une direction (F2, F3) opposée aux parois (6).

3. Dispositif selon la revendication 2, **caractérisé en ce que**, lors du raccordement du tronçon de chemin de câbles (2A) avec l'autre tronçon de chemin de câbles (2B), les deux languettes (20) pénètrent dans des trous (13) ménagés respectivement sur le fond (8) du tronçon de chemin de câbles et de l'autre tronçon de chemin de câbles.

4. Dispositif selon la revendication 3, **caractérisé en ce que** les languettes (20) sont insérées dans les trous (13) avec un jeu minimal (J) avec le contour des trous qui est compris entre 0,7 mm et 1,5 mm.

5. Dispositif selon l'une des revendications 2 à 4, **caractérisé en ce que** la deuxième branche (12) de l'éclisse (4) comprend une extrémité libre (18) élastiquement déformable et **en ce que**, une fois que le tronçon de chemin de câbles (2A) est raccordé avec l'autre tronçon de chemin de câbles (2B), la nervure (38) des moyens de verrouillage (M2) élastique s'oppose, en coopérant avec l'extrémité libre, au basculement des éclisses selon une direction opposée aux parois (6).

6. Dispositif selon l'une des revendications précédentes, **caractérisé en ce que** la partie terminale (24) des éclisses se prolonge par un pli (30) qui délimite le bord libre (32) de l'éclisse et qui forme, avec une partie cintrée (28) de la partie terminale de l'éclisse, un logement (29) de réception du bord libre (37) du tronçon de chemin de câbles (2A).

7. Dispositif selon la revendication 6, **caractérisé en ce que** les moyens (M1) de blocage de l'éclisse (4) en translation comprennent un relief (34) disposé au sein du logement (29) de réception du bord libre (37) du tronçon de chemin de câbles (2A), la partie terminale (36) des parois (6) étant coincée entre le relief et la portion cintrée (28) de la partie terminale de l'éclisse lorsque l'éclisse est dans sa configuration provisoire.

8. Dispositif selon l'une des revendications précédentes, **caractérisé en ce que** dans sa configuration provisoire, la deuxième branche (12) de l'éclisse (4) repose sur une nervure (38) prévue au fond (8) du tronçon de chemin de câbles (2A).

9. Méthode de raccordement d'un dispositif (1) selon l'une des revendications précédentes avec un autre tronçon de chemin de câbles (2B), **caractérisée en ce qu'**elle comprend des étapes consistant à :
a) mettre bout-à-bout le tronçon de chemin de câbles (2A) du dispositif et l'autre tronçon de chemin de câbles (2B),
b) basculer les éclisses (4) à partir de leur configuration provisoire selon une direction (F2, F3) opposée aux parois (6),
c) déplacer les éclisses (4) le long du tronçon de chemin de câbles jusqu'à l'extrémité du tronçon de chemin de câbles de manière que l'éclisse chevauche à la fois le tronçon de chemin de câbles et l'autre tronçon de chemin de câbles,
d) basculer les éclisses en direction (F6) des parois des tronçons de chemins de câbles,
e) verrouiller les éclisses (4) sur les parois des deux tronçons de chemin de câbles (2A, 2B).

10. Méthode selon la revendication 9, **caractérisé en ce qu'**elle comprend une étape f) antérieure à l'étape a), consistant à monter provisoirement les éclisses (4) sur le tronçon de chemin de câbles (2A), de manière qu'elles soient inscrites dans le tronçon de chemin de câbles.

11. Méthode selon l'une des revendications 9 et 10, **caractérisée en ce que** les étapes b) à e) ne font pas intervenir de déplacement du tronçon de chemin de câbles (2A) par rapport à l'autre tronçon de chemin de câbles (2B).

## Patentansprüche

1. Kabelkanalvorrichtung (1), umfassend:
- ein sich entlang einer Längsachse (X2A) erstreckendes Kabelkanalteilstück (2A), das einen zwischen zwei Wänden (6) begrenzten Boden (8) aufweist, wobei die Wände einen Endabschnitt (36), der eine erste freie Kante (37) begrenzt, aufweisen,
- zwei Schienen (4) zum Anschließen des Kabelkanalteilstückes an ein weiteres Kabelkanalteilstück (2B), die jeweils einen ersten Schenkel (14), welcher dazu ausgelegt ist, an einer Wand (6) des Kabelkanalteilstückes angeordnet zu werden, und einen zweiten Schenkel (12), welcher dazu ausgelegt ist, an dem Boden (8) des Kabelkanalteilstückes angeordnet zu werden, umfassen, wobei der erste Schenkel der Schienen einen Endabschnitt (24) aufweist, der eine zweite freie Kante (32) begrenzt und der den Endabschnitt (36) der Wand überdecken kann, wobei die Schienen auf dem Kabelkanalteilstück (2A) in einer Zwischenkonfiguration, in der sie die Wände (6) überdecken, verklemmt werden können,
**dadurch gekennzeichnet, dass** die Schienen (4) in der Zwischenkonfiguration auf dem Kabelkanalteilstück durch Folgendes immobilisiert werden:
- Brems- oder Blockiermittel (M1), die der axialen Verlagerung (F4) der Schienen entlang des Kabelkanalteilstückes entgegenwirken, und
- elastische Sperrmittel (M2), die dem Schwenken (F2) der Schienen um die Wände des Kabelkanalteilstückes entgegenwirken.

2. Vorrichtung nach Anspruch 1, **dadurch gekennzeichnet, dass** die elastischen Sperrmittel (M2) zwei Zungen (20), die von jeder Schiene (4) getragen werden, und eine Rippe (38), welche am Boden (8) des Kabelkanalteilstückes (2A) vorgesehen ist, umfassen, wobei die Rippe im Zusammenwirken mit den Zungen dem Schwenken der Schienen in einer gegen die Wände gerichteten Richtung (F2, F3) Widerstand entgegensetzt.

3. Vorrichtung nach Anspruch 2, **dadurch gekennzeichnet, dass** während des Anschließens des Kabelkanalteilstückes (2A) an das weitere Kabelkanalteilstück (2B) die zwei Zungen (20) in Löcher (13) eindringen, welche jeweils auf dem Boden (8) des Kabelkanalteilstückes und des weiteren Kabelkanalteilstückes ausgeführt sind.

4. Vorrichtung nach Anspruch 3, **dadurch gekennzeichnet, dass** die Zungen (20) mit minimalem Spiel (J) mit der Kontur der Löcher, das zwischen 0,7 mm und 1,5 mm liegt, in die Löcher (13) eingefügt sind.

5. Vorrichtung nach einem der Ansprüche 2 bis 4, **dadurch gekennzeichnet, dass** der zweite Schenkel (12) der Schiene (4) ein freies Ende (18) umfasst, welches elastisch verformbar ist, und dass, wenn das Kabelkanalteilstück (2A) an das weitere Kabelkanalteilstück (2B) angeschlossen wurde, die Rippe (38) der elastischen Sperrmittel (M2) im Zusammenwirken mit dem freien Ende dem Schwenken der Schienen in einer gegen die Wände (6) gerichteten Richtung entgegenwirkt.

6. Vorrichtung nach einem der vorangehenden Ansprüche,
**dadurch gekennzeichnet, dass** der Endabschnitt (24) der Schienen sich durch eine Knickstelle (30) fortsetzt, die die freie Kante (32) der Schiene begrenzt und die mit einem gewölbten Abschnitt (28) des Endabschnittes der Schiene ein Aufnahmegehäuse (29) für die freie Kante (37) des Kabelkanalteilstückes (2A) bildet.

7. Vorrichtung nach Anspruch 6, **dadurch gekennzeichnet, dass** die Verschiebeblockiermittel (M1) für die Schiene (4) eine innerhalb des Aufnahmegehäuses (29) für die freie Kante (37) des Kabelkanalteilstückes (2A) angeordnete Erhöhung (34) umfassen, wobei der Endabschnitt (36) der Wände (6) zwischen der Erhöhung und dem gewölbten Teil (28) des Endabschnittes der Schiene verklemmt ist, wenn die Schiene sich in ihrer Zwischenkonfiguration befindet.

8. Vorrichtung nach einem der vorangehenden Ansprüche, **dadurch gekennzeichnet, dass** der zweite Schenkel (12) der Schiene (4) in seiner Zwischenkonfiguration auf einer am Boden (8) des Kabelkanalteilstückes (2A) vorgesehenen Rippe (38) aufliegt.

9. Verfahren zum Anschließen einer Vorrichtung (1) nach einem der vorangehenden Ansprüche an ein weiteres Kabelkanalteilstück (2B), **dadurch gekennzeichnet, dass** das Verfahren die folgenden Schritte umfasst:
a) Aneinanderfügen des Kabelkanalteilstückes (2A) der Vorrichtung und des weiteren Kabelkanalteilstückes (2B),
b) Schwenken der Schienen (4) aus ihrer Zwischenkonfiguration in einer gegen die Wände (6) gerichteten Richtung (F2, F3),
c) Verlagern der Schienen (4) entlang des Kabelkanalteilstückes bis zum Ende des Kabelkanalteilstückes, derart, dass die Schiene das Kabelkanalteilstück und das weitere Kabelkanalteilstück zugleich überdeckt,
d) Schwenken der Schienen in Richtung (F6) der Wände der Kabelkanalteilstücke,
e) Sperren der Schienen (4) auf den Wänden der zwei Kabelkanalteilstücke (2A, 2B).

10. Verfahren nach Anspruch 9, **dadurch gekennzeichnet, dass** das Verfahren einen Schritt f) vor Schritt a) umfasst, der darin besteht, dass die Schienen (4) übergangsweise auf das Kabelkanalteilstück (2A) montiert werden, derart, dass diese Teil des Kabelkanalteilstückes sind.

11. Verfahren nach einem der Ansprüche 9 und 10, **dadurch gekennzeichnet, dass** die Schritte b) bis e) keine Verlagerung des Kabelkanalteilstückes (2A) gegenüber dem weiteren Kabelkanalteilstück (2B) bewirken.

## Claims

1. Cable route device (1) comprising:
- a cable route section (2A) extending along a longitudinal axis (X2A) and having a bottom (8) delimited between two walls (6), these walls having an end portion (36) which delimits a first free edge (37),
- two fishplates (4) for joining the cable route section to another cable route section (2B), each of which fishplates has a first arm (14) arranged to be disposed against a wall (6) of the cable route section and a second arm (12) arranged to be disposed against the bottom (8) of the cable route section, the first arm of the fishplates having an end portion (24) which delimits a second free edge (32) and which is capable of overlying the end portion (36) of the wall, the fishplates being capable of being held fast on the cable route section (2A) in a provisional configuration in which they overlie the walls (6),
**characterised in that**, in the provisional configuration, the fishplates (4) are immobilised on the cable route section by:
- braking or blocking means (M1) which oppose displacement (F4) of the fishplates in axial translation along the cable route section, and
- resilient latching means (M2) which oppose pivoting (F2) of the fishplates about the walls of the cable route section.

2. Device according to claim 1, **characterised in that** the resilient latching means (M2) comprise two tongues (20) carried on each fishplate (4) and a rib (38) provided in the bottom (8) of the cable route section (2A), the rib providing, in co-operation with the tongues, resistance to pivoting of the fishplates in a direction (F2, F3) away from the walls (6).

3. Device according to claim 2, **characterised in that**, when the cable route section (2A) is joined to the other cable route section (2B), the two tongues (20) enter holes (13) provided respectively in the bottoms (8) of the cable route section and the other cable route section.

4. Device according to claim 3, **characterised in that** the tongues (20) are inserted in the holes (13) with minimum play of between 0.7 mm and 1.5 mm with respect to the contour of holes.

5. Device according to one of claims 2 to 4, **characterised in that** the second arm (12) of the fishplates (4) comprises a resiliently deformable free end (18); and **in that**, once the cable route section (2A) has been joined to the other cable route section (2B), the rib (38) of the resilient latching means (M2) opposes, in co-operation with the free end, pivoting of the fishplates in a direction away from the walls (6).

6. Device according to one of the preceding claims, **characterised in that** the end portion (24) of the fishplates is extended by a fold (30) which delimits the free edge (32) of the fishplate and which forms, together with an arc-shaped portion (28) of the end portion of the fishplate, a recess (29) for receiving the free edge (37) of the cable route section (2A).

7. Device according to claim 6, **characterised in that** the means (M1) for blocking translation of the fishplate (4) comprise a relief (34) arranged inside the recess (29) for receiving the free edge (37) of the cable route section (2A), the end portion (36) of the walls (6) being held fast between the relief and the arc-shaped portion (28) of the end portion of the fishplate when the fishplate is in its provisional configuration.

8. Device according to one of the preceding claims, **characterised in that**, in its provisional configuration, the second arm (12) of the fishplate (4) rests on a rib (38) provided in the bottom (8) of the cable route section (2A).

9. Method of joining a device (1) according to one of the preceding claims to another cable route section (2B), **characterised in that** it comprises steps consisting of:
a) placing the cable route section (2A) of the device and the other cable route section (2B) end to end,
b) pivoting the fishplates (4), starting from their provisional configuration, in a direction (F2, F3) away from the walls (6),
c) moving the fishplates (4) along the cable route section to the end of the cable route section so that the fishplate overlies both the cable route section and the other cable route section,
d) pivoting the fishplates in a direction (F6) towards the walls of the cable route sections,
e) latching the fishplates (4) to the walls of the two cable route sections (2A, 2B).

10. Method according to claim 9, **characterised in that** it comprises a step f), prior to step a), consisting of provisionally mounting the fishplates (4) on the cable route section (2A) so that they are circumscribed within the cable route section.

11. Method according to one of claims 9 and 10, **characterised in that** steps b) to e) do not involve movement of the cable route section (2A) relative to the other cable route section (2B).
